# EUROPÄISCHE PATENTANMELDUNG

(11) **EP 3 372 290 A2**
(43) Veröffentlichungstag der Anmeldung: **12.09.2018**
(21) Anmeldenummer: 18157807.1
(22) Anmeldetag: 21.02.2018
(51) Int. Cl.: B01D 21/00, B01D 21/24, B03C 1/28, F24D 19/00

(54) **SCHLAMMABSCHEIDER FÜR EINEN HEIZKREISLAUF**

(30) Priorität: 10.03.2017 DE 202017001303 U
(71) Anmelder: Gebr. Tuxhorn GmbH & Co. KG, 33659 Bielefeld (DE)
(72) Erfinder: Krebs, Stephan N., 33824 Werther (DE); Filipowsky, Michael, 33334 Gütersloh (DE); Thole, Frank, 33739 Bielefeld (DE); Sroda, Roman, 33649 Bielefeld (DE)
(74) Vertreter: Behr, Wolfgang

(57) **Zusammenfassung**

Die vorliegende Erfindung betrifft einen Schlammabscheider für einen Heizkreislauf mit einem Zulauf, einem Ablauf und einem Auffangbehälter, wobei der Schlammabscheider ein in den Auffangbehälter hineinragendes, mit dem Ablauf verbundenes Innenrohr aufweist, wobei der Auffangbehälter um das Innenrohr herum einen Ringraum bildet, welcher zum Zulauf hin offen ist.

## Beschreibung

Die vorliegende Erfindung betrifft einen Schlammabscheider für einen Heizkreislauf mit einem Zulauf, einem Ablauf und einem Auffangbehälter.

Schlammabscheider werden eingesetzt, um Schlamm und/oder Magnetit, welches sich im Wasser des Heizkreislaufs befindet, abzuscheiden. Hierdurch wird verhindert, dass sich der Schlamm und/oder das Magnetit an Bauteilen des Heizkreislaufes wie bspw. der Pumpe ansetzt und deren Funktion stört.

Bei bekannten Schlammabscheidern wird der vom Zulauf zum Ablauf fließende Flüssigkeitsstrom über eine komplexe Innengeometire des Schlammabscheiders geführt, um so ein Absetzen von Schlamm und/oder Magnetitpartikeln zu fördern. Hierdurch weisen bekannte Schlammabscheider üblicherweise einen relativ hohen Strömungswiederstand auf sowie einen großen Bauraum auf.

Weiterhin werden bekannte Schlammabscheider üblicherweise separat in eine Leitung des Heizkreislaufes eingesetzt, so dass für die Installation eines Schlammabscheiders zusätzlicher Bauraum und Aufwand notwendig ist.

Aufgabe der vorliegenden Erfindung ist es daher, einen verbesserten Schlammabscheider und/oder eine verbesserte Anordnung eines Schlammabscheiders zur Verfügung zu stellen.

Diese Aufgabe wird durch einen Schlammabscheider gemäß Anspruch 1 sowie eine Heizkreis-Pumpenbaugruppe gemäß Anspruch 10 gelöst. Bevorzugte Ausgestaltungen der vorliegenden Erfindung sind Gegenstand der Unteransprüche.

Die vorliegende Erfindung umfasst in einem ersten Aspekt einen Schlammabscheider für einen Heizkreislauf mit einem Zulauf, einem Ablauf, und einem Auffangbehälter. Der erfindungsgemäße Schlammabscheider ist dadurch gekennzeichnet, dass er ein in den Auffangbehälter hineinragendes, mit dem Ablauf verbundenes Innenrohr aufweist, wobei der Auffangbehälter um das Innenrohr herum einen Ringraum bildet, welcher zum Zulauf hin offen ist. Hierdurch ergibt sich eine besonders kompakte und einfach herstellbare Bauform. Insbesondere kann die Flüssigkeit vom Zulauf kommend in den Ringraum einströmen, so dass sich im Ringraum Schlamm und/oder Magnetit absetzt. Der Ringraum ist bevorzugt zum Ablauf hin geschlossen.

In einer bevorzugten Ausgestaltung der vorliegenden Erfindung umgibt der Auffangbehälter das Innenrohr koaxial. Hierdurch ergibt sich in besonders einfacher Weise der erfindungsgemäße Ringraum zwischen dem Auffangbehälter und dem Innenrohr.

Bei dem Schlammabscheider gemäß der vorliegenden Erfindung weisen der Zulauf und der Ablauf bevorzugt eine gemeinsame Achse auf. Insbesondere weisen der Zulauf und der Ablauf dabei die gleiche Symmetrieachse auf, und sind mit einem Abstand zueinander auf dieser Symmetrieachse angeordnet. Die gemeinsame Achse hat den Vorteil, dass der Schlammabscheider in gleicher Weise wie ein gerades Rohrstück in eine Leitung des Heizkreislaufes eingefügt werden kann.

Bevorzugt umgeben das Innenrohr und/oder der Auffangbehälter die gemeinsame Achse des Zulaufs und des Ablaufs koaxial. Hierdurch ergibt sich ein Schlammabscheider, welcher insgesamt eine im Wesentlichen rohrförmige Form aufweist.

Gemäß einer bevorzugten Ausgestaltung der vorliegenden Erfindung ist ein inneres Ende des Innenrohres offen und liegt dem Zulauf frei gegenüber. Bevorzugt fließt hierdurch ein Hauptstrom durch den Schlammabscheider direkt von dem Zulauf zu dem offenen Ende des Innenrohres und von dort zum Ablauf.

Alternativ oder zusätzlich kann ein Nebenstrom an dem inneren Ende des Innenrohrs vorbei in den durch den Auffangbehälter und das Innenrohr gebildeten Ringraum fließen.

Die Erfinder der vorliegenden Erfindung haben durch Untersuchungen festgestellt, dass eine solche Ausgestaltung, bei welcher der Hauptstrom von dem Zulauf direkt und ohne Umlenkung zu dem offenen Ende des Innenrohres fließt, nicht nur zu einem geringeren Strömungswiderstand durch den Schlammabscheider führt, sondern überraschenderweise auch zu einer besseren Abscheideleistung.

Da in einem Heizkreislauf die Flüssigkeit ständig umläuft, ist es für eine gute Abscheideleistung nicht notwendig, dass die Flüssigkeit bereits durch einen Durchlauf durch den Schlammabscheider komplett gereinigt wird. Daher ist es für die Abscheideleistung des Schlammabscheiders auch nicht von Bedeutung, dass der Hauptstrom im Wesentlichen ungehindert durch den Schlammabscheider fließt. Entscheidend ist vielmehr, dass sich durch die erfindungsgemäße Konstruktion eine verbesserte Abscheidung von Schlamm und/oder Magnetit im Nebenstrom ergibt, welcher an dem inneren Ende des Innenrohrs vorbei in den durch den Auffangbehälter und das Innenrohr gebildeten Ringraum fließt. Die verbesserte Abscheideleistung beruht dabei offenbar darauf, dass der Nebenstrom bei dieser Konstruktion stark abgebremst wird, so dass sich Schlamm und Magnetit gut absetzen.

In einer bevorzugten Ausgestaltung der vorliegenden Erfindung weist das Innenrohr mindestens eine und bevorzugt mehrere seitliche Öffnungen auf. Insbesondere kann zumindest ein Nebenstrom an dem inneren Ende des Innenrohrs vorbei durch den durch den Auffangbehälter und das Innenrohr gebildeten Ringraum und von dort zu der mindestens einseitigen Öffnung des Innenrohrs in das Innenrohr und von dort zum Ablauf fließen.

In einer möglichen Ausführungsform kann das innere Ende des Innenrohrs geschlossen sein, so dass der komplette durch den Schlammabscheider fließende Strom durch die seitlichen Öffnungen in das Innenrohr einströmt.

Bevorzugt ist das innere Ende des Innenrohres jedoch wie oben beschrieben offen, so dass ein Hauptstrom durch das offene Ende des Innenrohres abfließt. Die seitlichen Öffnungen dienen in diesem Fall dazu, dass der durch den Ringraum geleitete Nebenstrom besser abfließen kann.

Bevorzugt sind die eine oder mehreren seitlichen Öffnungen in der Nähe des inneren Endes des Innenrohres vorgesehen. Bevorzugt beträgt der kleinste Abstand zwischen einer inneren Kante einer seitlichen Öffnung und dem inneren Ende des Innenrohres maximal 50% des minimalen Abstandes zwischen einer äußeren Kante einer seitlichen Öffnung und dem anderen, äußeren Ende des Ringraumes zwischen Auffangbehälter und Innenrohr, weiter bevorzugt maximal 20%.

Der durch den Auffangbehälter und das Innenrohr gebildete Ringraum kann einen Anschluss für einen Entleerungshahn aufweisen. Der Entleerungshahn kann zum Entfernen von sich in dem Ringraum ansammelndem Schlamm und/oder Magnetit eingesetzt werden. Bevorzugt ist der Anschluss für den Entleerungshahn im Bereich des ablaufseitigen Endes des Ringraumes vorgesehen. Der Anschluss kann schräg zur Hauptachse des Schlammabscheiders verlaufen, bevorzugt mit einem spitzen Winkel zur Seite des Ablaufes hin.

Bevorzugt weist der Auffangbehälter einen mittleren rohrförmigen Abschnitt auf. Der mittlere rohrförmige Abschnitt umgibt bevorzugt zumindest teilweise das Innenrohr. Bevorzugt befindet sich das innere Ende des Innenrohres im Bereich des rohrförmigen Abschnittes des Auffangbehälters.

Bevorzugt verjüngt sich der Auffangbehälter zum Ablauf und zum Zulauf hin. Bevorzugt erfolgt die Verjüngung zumindest zum Zulauf hin kontinuierlich bis zum Erreichen des Innendurchmessers des Zulaufes.

Bevorzugt beträgt der maximale Innendurchmesser des Auffangbehälters maximal das 5-fache des Innendurchmessers des Zu- oder Ablaufs, bevorzugt maximal das 4-fache, weiterhin bevorzugt maximal das 3-fache. Hierdurch ergibt sich eine sehr schlanke Form des Schlammabscheiders.

Bevorzugt ist der maximale Innendurchmesser des Auffangbehälters jedoch größer als der Innendurchmesser des Zu- oder Ablaufs. Bevorzugt beträgt der maximale Innendurchmesser des Auffangbehälters mindestens das 1,2-fache des Innendurchmessers des Zu- oder Ablaufs, weiter bevorzugt mindestens das 1,4-fache, weiter bevorzugt mindestens das 1,8-fache. Durch diese Aufweitung kann ein zum Ansammeln von Schlamm und/oder Magnetit ausreichend großer Ringraum zwischen dem Auffangbehälter und dem Innenrohr zur Verfügung gestellt werden.

In einer bevorzugten Ausgestaltung kann das Innenrohr im Bereich des Ringraums einen kleineren Innendurchmesser aufweisen als im Bereich des Ablaufs. Hierdurch ergeben sich zum einen verbesserte Strömungsverhältnisse. Zum anderen wird der Ringraum vergrößert. Bevorzugt ist der Innendurchmesser des Innenrohres im Bereich des Ringraumes um mindestens 10% kleiner als im Bereich des Ablaufs.

Der erfindungsgemäße Schlammabscheider weist bevorzugt eine langgestreckte, im Wesentlichen rohrförmige Ausgestaltung mit einer durch dem Zu- und Ablauf definierten Hauptachse auf.

Bevorzugt beträgt die Länge des Schlammabscheiders mindestens das 1,5-fache der maximalen Dicke des Schlammabscheiders, weiterhin bevorzugt mindestens das 2-fache der maximalen Dicke.

Die Länge wird bevorzugt als der Abstand zwischen den äußeren Enden von Ablauf und Zulauf gemessen. Die Dicke wird bevorzugt als maximale Erstreckung in einer Ebene senkrecht zu einer Verbindungslinie zwischen Ablauf und Zulauf gemessen.

Der Auffangbehälter und/oder das Innenrohr können erfindungsgemäß axialsymmetrisch und weiter bevorzugt rotationssymmetrisch ausgestaltet sein. Bevorzugt entspricht die Symmetrieachse der durch Zulauf und Ablauf definierten Achse des Schlammabscheiders.

Erfindungsgemäß kann sich der Auffangbehälter vom Zulauf bis zum Ablauf erstrecken. Insbesondere können Zu- und Ablauf durch eine obere und untere Öffnung des Ablaufbehälters gebildet sein. Der Auffangbehälter kann im Bereich des Zulaufs und des Ablaufs jeweils ein Außengewinde und/oder einen Flanschabschnitt aufweisen, wobei das Außengewinde und/oder der Flanschabschnitt bspw. auf einem Ringelement vorgesehen ist, welches den Ablauf oder Zulauf umgibt und sich auf einem kragenförmigen Abschluss des Auffangbehälters abstützt.

In einer bevorzugten Ausgestaltung der vorliegenden Erfindung ist das Innenrohr im Bereich des Ablaufs in den Auffangbehälter eingepresst. Eine komplette Dichtigkeit ist in diesem Bereich nicht zwingend notwendig, so dass eine Befestigung des Innenrohrs mittels Verpressung ausreicht und eine flüssigkeitsdichte Verbindung, bspw. durch Lötung, nicht notwendig ist. Hierdurch ergibt sich eine besonders einfache und kostengünstige Konstruktion.

Das Innenrohr kann bevorzugt durch Umformung eines zylinderförmigen Rohres gefertigt sein.

Für die Herstellung des Auffangbehälters bestehen unterschiedliche Möglichkeiten: Gemäß einer ersten Möglichkeit kann der Auffangbehälter als Metallgussteil gefertigt werden, insbesondere aus Messing.

Gemäß einer zweiten Möglichkeit kann der Auffangbehälter als umgeformtes Rohr ausgeführt sein, insbesondere als umgeformtes Kupferrohr.

Gemäß einer dritten Möglichkeit kann der Auffangbehälter als Kunststoff-Spritzgussteil ausgeführt sein. In diesem Fall ist bevorzugt auch das Innenrohr als Kunststoff-Spritzgussteil ausgeführt.

Der Anschluss für den Entleerungshahn kann einstückig mit dem Auffangbehälter hergestellt oder mit einer Öffnung des Auffangbehälters verlötet oder an diese angespritzt sein.

Ist der Auffangbehälter als Metallgussteil gefertigt, kann der Entleerungshahn einstückig mitgegossen werden, oder mit einer Öffnung des Metallgussteils verlötet werden. Ist der Auffangbehälter als ungeformtes Rohr gefertigt, so ist der Anschluss bevorzugt mit einer Öffnung des Auffangbehälters verlötet. Ist der Auffangbehälter als Kunststoff-Spritzgussteil ausgeführt, so wird der Anschluss bevorzugt an diesem angespritzt.

Der Auffangbehälter kann in einer ersten Ausgestaltung einstückig hergestellt sein. Dies ist insbesondere dann bevorzugt, wenn der Auffangbehälter als Metallgussteil oder als ungeformtes Rohr ausgeführt ist.

Alternativ kann der Auffangbehälter aus mindestens zwei Elementen bestehen, welche bevorzugt über eine Dichtung oder stoffflüssig miteinander verbunden sind. Dies ist insbesondere dann bevorzugt, wenn der Auffangbehälter als Kunststoff-Spritzgussteil ausgeführt ist. Insbesondere kann der Auffangbehälter in diesem Fall aus zwei Elementen hergestellt werden, welche jeweils gesondert als Spritzgussteil gefertigt werden. Die Verbindungsebene zwischen den beiden Elementen steht bevorzugt senkrecht auf der Hauptachse des Schlammabscheiders.

Der erfindungsgemäße Schlammabscheider weist bevorzugt mindestens einen Permanentmagneten auf, welcher im Bereich des Ringraums am Außenumfang des Auffangbehälters angeordnet ist. Hierdurch wird die Abscheidung von Magnetit verbessert.

Bevorzugt umgeben ein oder mehrere Permanentmagnete den Auffangbehälter ringförmig. Hierdurch ergibt sich eine besonders effektive Abscheidung von Magnetit.

Bevorzugt ist der mindestens eine Permanentmagnet abnehmbar. Dies erleichtert die Entleerung des Schlammabscheiders, da das im Schlammabscheider angesammelte Magnetit durch den abgenommenen Permanentmagneten nunmehr leichter abgezogen werden kann. Insbesondere können hierfür Ringsegmente mit Permanentmagneten vorgesehen sein, welche am Außenumfang des Auffangbehälters lösbar anordenbar sind.

Die vorliegende Erfindung umfasst in einem zweiten Aspekt eine Heizkreis-Pumpenbaugruppe mit einem Vorlauf-Rohrabschnitt, einem Rücklauf-Rohrabschnitt und einer in dem Vorlauf-Rohrabschnitt angeordneten Heizkreispumpe. Erfindungsgemäß ist vorgesehen, dass ein Schlammabscheider in den Rücklauf-Rohrabschnitt der Heizkreis-Pumpenbaugruppe integriert ist. Diese Anordnung des Schlammabscheiders ermöglicht eine erheblich vereinfachte Installation, da der Schlammabscheider als Bestandteil der Heizkreis-Pumpengruppe ohne zusätzlichen Aufwand in den Heizkreis integriert werden kann. Weiterhin ist auch kein zusätzlicher Bauraum notwendig.

Bevorzugt ist die Heizkreis-Pumpenbaugruppe mit dem Schlammabscheider vormontiert, so dass sie als Baueinheit in den Heizkreis integriert werden kann.

Bevorzugt sind der Vorlauf-Rohrabschnitt und der Rücklauf-Rohrabschnitt mechanisch miteinander verbunden. Die Verbindung kann entweder durch ein oder mehrere Rohr- und/oder Ventilsegmente erfolgen, welche ohnehin aufgrund der Funktion der Heizkreis-Pumpenbaugruppe benötigt werden, oder durch ein lediglich der mechanischen Verbindung dienendes Verbindungselement.

Bevorzugt weisen der Vorlauf-Rohrabschnitt und der Rücklauf-Rohrabschnitt jeweils ein Thermometer und/oder ein Absperrventil auf.

Weiterhin können der Vorlauf-Rohrabschnitt und der Rücklauf-Rohrabschnitt parallel zueinander verlaufen. Bevorzugt weisen der Vorlauf-Rohrabschnitt und der Rücklauf-Rohrabschnitt die gleiche Länge und/oder parallel zueinander angeordnete Anschlüsse für den kesselseitigen und den heizkreisseitigen Vorlauf bzw. Rücklauf auf.

Bevorzugt weist der in den Rücklauf integrierte Schlammabscheider im wesentlichen die gleiche Länge auf wie die Pumpe. Insbesondere kann vorgesehen sein, dass die Länge des Schlammabscheiders zwischen 50% und 150% der Länge der Pumpe beträgt, bevorzugt zwischen 90% und 110%. Insbesondere können der Schlammabscheider und die Pumpe die gleiche Länge aufweisen. Die Länge misst sich dabei jeweils zwischen den Außenkanten von Zu- und Ablauf.

Bevorzugt umfasst der Schlammabscheider einen Ablauf und einen Zulauf, welche eine gemeinsame Achse aufweisen. Er kann hierdurch anstelle eines im Rücklauf-Rohrabschnitt ansonsten ohnehin notwendigen Verbindungsrohres eingesetzt werden.

Der Zu- und Ablauf des Schlammabscheiders können jeweils mit einem Rohrelement und/oder eine Ventilbaugruppe der Heizkreis-Pumpenbaugruppe verschraubt sein.

Bevorzugt weist der Schlammabscheider einen mittleren rohrförmigen Abschnitt auf. Bevorzugt verjüngt sich dieser zum Zulauf und zum Ablauf hin. Alternativ oder zusätzlich kann der mittlere rohrförmige Abschnitt koaxial zu der gemeinsamen Achse von Zulauf und Ablauf angeordnet sein.

Bevorzugt beträgt der maximale Innendurchmesser des Schlammabscheiders maximal das 5-fache des Innendurchmessers des Zu- oder Ablaufs, bevorzugt maximal das 4-fache, weiterhin bevorzugt maximal das 3-fache. Alternativ oder zusätzlich kann der maximale Innendurchmesser des Schlammabscheiders mindestens das 1,2-fache des Innendurchmessers des Zu- oder Ablaufs betragen, weiter bevorzugt mindestens das 1,4-fache, weiterhin bevorzugt das 1,8-fache. Bei dem maximalen Innendurchmesser des Schlammabscheiders kann es sich insbesondere um den Innendurchmesser des mittleren rohrförmigen Abschnitts handeln.

Bevorzugt beträgt die Länge des Schlammabscheiders mindestens das 1,5-fache der maximalen Dicke des Schlammabscheiders, weiterhin bevorzugt mindestens das 2-fache der maximalen Dicke. Insbesondere kann der Schlammabscheider eine im wesentlichen rohrförmige Form mit einer durch die Achse von Zu- und Ablauf definierten Hauptachse aufweisen.

Der Schlammabscheider weist bevorzugt einen Entleerungshahn auf, über welchen angesammelter Schlamm und/oder Magnetit aus dem Schlammabscheider entfernt werden kann.

Weiterhin bevorzugt weist der Schlammabscheider mindestens einen Permanentmagneten auf. Bevorzugt ist dieser am Außenumfang des Schlammabscheiders angeordnet. Insbesondere können ein oder mehrere Permanentmagnete den Schlammabscheider ringförmig umgeben. Bevorzugt sind die Permanentmagnete abnehmbar am Schlammabscheider angeordnet.

Besonders bevorzugt ist der Schlammabscheider, welcher gemäß dem zweiten Aspekt im Rücklauf der Heizkreis-Pumpenbaugruppe integriert ist, so ausgeführt, wie dies oben im Hinblick auf den Schlammabscheider gemäß dem ersten Aspekt bereits beschrieben wurde. Insbesondere kann ein Schlammabscheider gemäß dem ersten Aspekt gemäß dem zweiten Aspekt in den Rücklauf einer Heizkreis-Pumpenbaugruppe integriert sein.

Bevorzugt weist die Heizkreis-Pumpenbaugruppe gemäß der vorliegenden Erfindung eine gemeinsame Isolierung für mehrere und bevorzugt alle Bestandteile der Heizkreis-Pumpenbaugruppe auf. Insbesondere kann die Isolierung eine vorder- und eine rückseitige Formschale aufweisen, welche die Heizkreis-Pumpenbaugruppe in Form eines Gehäuses umgeben. Die vordere Formschale kann mindestens eine Aussparung für die Pumpe aufweisen. Hierdurch wird eine Überhitzung der Pumpe vermieden. Bevorzugt überdeckt die vordere Formschale den Schlammabscheider. Beispielsweise kann dies durch einen im Bereich des Schlammabscheiders in eine Aussparung der vorderen Formschale eingesetzten Deckel erfolgen.

Bevorzugt sind die vordere und hintere Formschale bezüglich des Vorlauf-Rohrabschnitts und des Rücklauf-Rohrabschnittes symmetrisch ausgeführt, und werden durch Einsätze an die jeweilige Ausgestaltung angepasst.

Besonders bevorzugt ist die Isolierung so ausgestaltet, wie dies aus der DE 202013002350U1 bekannt ist.

Die vorliegende Erfindung umfasst weiterhin eine Heizkreis-Pumpenbaugruppe gemäß dem zweiten Aspekt, wobei es sich bei dem Schlammabscheider der Heizkreis-Pumpenbaugruppe um einen Schlammabscheider gemäß dem ersten Aspekt der vorliegenden Erfindung handelt.

Weiterhin umfasst die vorliegende Erfindung eine Heizung mit einem Heizkreis mit einem Schlammabscheider und/oder mit einer Heizkreis-Pumpenbaugruppe, wie sie oben beschrieben wurden. Die Heizung kann insbesondere einen Vorlauf und einen Rücklauf aufweisen, in welchen die Heizkreis-Pumpenbaugruppe eingefügt ist.

Der erfindungsgemäße Schlammabscheider wird sowohl gemäß dem ersten, als auch gemäß dem zweiten Aspekt vertikal mit einem oben angeordneten Zulauf und einem unten angeordneten Ablauf montiert

Die vorliegende Erfindung wird nun anhand von Ausführungsbeispielen sowie Zeichnungen näher beschrieben.

Dabei zeigen:
- Fig. 1:: ein Ausführungsbeispiel eines Schlammabscheiders gemäß dem ersten Aspekt der vorliegenden Erfindung in einer Prinzipdarstellung,
- Fig. 2:: ein Ausführungsbeispiel eines erfindungsgemäßen Schlammabscheiders gemäß dem ersten Aspekt in einer Schnittansicht als Konstruktionszeichnung,
- Fig.3:: ein erstes Ausführungsbeispiel einer erfindungsgemäßen Heizkreis-Pumpenbaugruppe und
- Fig.4:: ein zweites Ausführungsbeispiel einer erfindungsgemäßen Heizkreis-Pumpenbaugruppe.

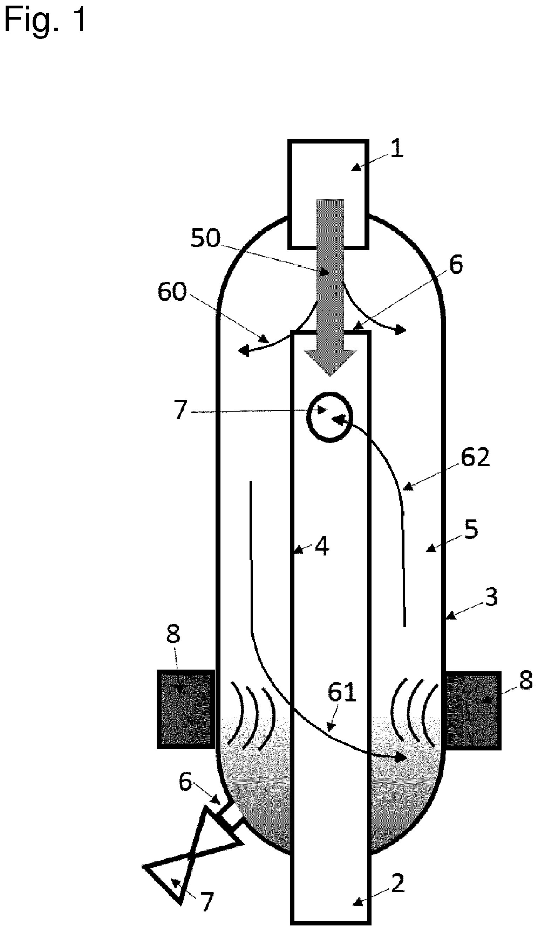

Fig. 1 zeigt ein erstes Ausführungsbeispiel eines erfindungsgemäßen Schlammabscheiders in einer Prinzipdarstellung. Der Schlammabscheider weist einen Zulauf 1, einen Ablauf 2 und einen Auffangbehälter 3 auf. Weiterhin ist ein in den Auffangbehälter 3 hineinragendes, mit dem Ablauf 2 verbundenes Innenrohr 4 vorgesehen. Der Auffangbehälter 3 ist so um das Innenrohr 4 herum angeordnet, dass er zusammen mit diesem einen Ringraum bildet, welcher zum Zulauf 1 hin offen ist.

Das Innenrohr 4 ist an seinem inneren Ende 6 offen, und liegt dem Zulauf 1 gegenüber. Hierdurch gelangt ein Hauptstrom 50 von dem Zulauf 1 ohne eine Umlenkung zu dem inneren Ende 6 des Innenrohres und von dort aus zum Ablauf 2. Hierdurch ergibt sich ein gegenüber bekannten Schlammabscheidern erheblich verringerter Strömungswiderstand.

Ein Nebenstrom fließt dagegen an dem inneren Ende 6 des Innenrohres 4 vorbei in den zwischen dem Auffangbehälter 3 und dem Innenrohr 4 gebildeten Ringraum. Die Strömungsgeschwindigkeit des Nebenstroms 60 ist erheblich verlangsamt, so dass Schlamm und/oder Magnetit absinkt und sich im unteren Bereich des Ringraumes 5 ablagert.

Der erfindungsgemäße Schlammabscheider wird vertikal mit einem oben angeordneten Zulauf 1 und einem unten angeordneten Ablauf 2 montiert. Das offene Ende des Ringraumes 5 ist daher oben, das zum Ablauf 2 hin geschlossene Ende des Ringraumes 5 dagegen unten angeordnet, so dass sich dort der Schlamm und/oder das Magnetit ansammeln können.

Das Innenrohr 4 weist in einem oberen, zu seinem inneren Ende benachbarten Bereich eine oder mehrere seitliche Öffnungen 7 auf, durch welche der Nebenstrom 62 aus dem Ringraum 5 in das Innenrohr fließen und sich dort mit dem Hauptstrom 6 vereinigen kann.

Der Nebenstrom fließt daher zunächst seitlich am inneren Ende 6 des Innenrohres 4 vorbei in den Ringraum 5, verlangsamt sich, strömt wie durch Pfeil 61 gezeigt durch den Ringraum und fließt dann wie durch Pfeil 62 gezeigt wieder durch die seitlichen Öffnungen 7 in das Innenrohr und von dort zum Ablauf 2 ab.

Im Ausführungsbeispiel ist der Auffangbehälter 3 koaxial zu dem Hauptstrom 50 durch den Schlammabscheider angeordnet. Weiterhin weisen der Zulauf 1 und der Ablauf 2 eine gemeinsame Achse auf, welche gleichzeitig die Hauptachse des Schlammabscheiders bildet. Im Ausführungsbeispiel sind sowohl das Innenrohr 4, als auch der Auffangbehälter 3 koaxial zu dieser gemeinsamen Achse von Zulauf und Ablauf 2 angeordnet. Insbesondere können das Innenrohr und der Auffangbehälter rotationssymmetrisch zu diese Achse ausgeführt sein.

Der Schlammabscheider weist weiterhin einen Anschluss 6 für einen Entleerungshahn 7 auf, mit welchem im Ringraum angesammelter Schlamm bzw. Magnetit abgelassen werden kann. Der Anschluss 6 ist im Bereich des ablaufseitigen Endes des Ringraumes 5 angeordnet, und weist im Ausführungsbeispiel eine Achse auf, welche in einem spitzen Winkel zur Hauptachse des Schlammabscheiders nach unten hin verläuft.

Weiterhin sind eine oder mehrere Permanentmagnete 8 vorgesehen, die am Außenumfang des Auffangbehälters 3 im Bereich des Ringraumes 5, bevorzugt im unteren Bereich des Ringraumes 5, angeordnet sind. Insbesondere kann es sich um mehrere Permanentmagnete handeln, welche den Auffangbehälter 3 ringförmig umgeben.

Bevorzugt sind die Permanentmagnete abnehmbar, um das gesammelte Magnetit leichter ablassen zu können. Insbesondere können mindestens zwei mit Permanentmagneten versehene Ringsegmente am Außenumfang des Auffangbehälters lösbar anordenbar sein.

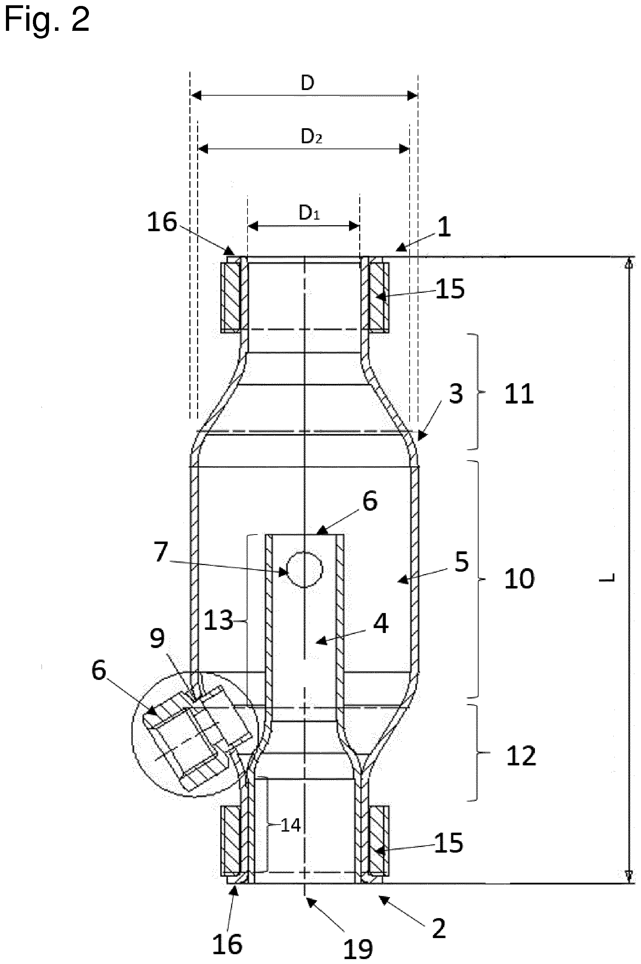

Fig. 2 zeigt nun ein konkretes Ausführungsbeispiel in einer Schnittansicht parallel zur Hauptachse 19 des Schlammabscheiders. Das in Fig. 2 gezeigte konkrete Ausführungsbeispiels weist den bereits im Hinblick auf Fig. 1 beschriebenen prinzipiellen Aufbau auf, so dass zunächst vollumfänglich auf die obige Beschreibung verwiesen wird.

Bei dem in Fig. 2 gezeigten Ausführungsbeispiel bildet ein oberes Ende des Auffangbehälters 3 den Zulauf 1 und ein unteres Ende des Auffangbehälters 3 den Ablauf 2. Das Innenrohr 4 ist als separates Element ausgeführt, welches in das den Ablauf 2 bildende untere Ende des Auffangbehälters 3 eingeschoben, im Ausführungsbeispiel eingepresst ist.

Das Innenrohr 4 weist einen ersten Abschnitt 14 auf, mit welchem es in den Ablauf 2 eingepresst ist, und einen zweiten Abschnitt 13, welcher von dem Ringraum 5 umgeben ist. Der Durchmesser des Innenrohres 4 ist im zweiten Abschnitt 13 kleiner als im ersten Abschnitt 14. Bevorzugt ist der Durchmesser innerhalb des ersten und des zweiten Abschnittes jeweils im Wesentlichen konstant, wobei sich der Durchmesser in einem Übergangsbereich stetig zwischen dem ersten und dem zweiten Abschnitt verringert.

Der Auffangbehälter 3 weist einen mittleren, rohrförmigen Abschnitt 10 auf, und verjüngt sich oben und unten in an den rohrförmigen Abschnitt 10 anschließenden Abschnitten 11 und 12 zum Zulauf 1 bzw. Ablauf 2 hin. Das innere Ende 6 des Innenrohres 4 befindet sich in axialer Richtung gesehen im Bereich des rohrförmigen Abschnittes 10.

Im Bereich des rohrförmigen Abschnittes 10 weist der Auffangbehälter einen im wesentlichen konstanten Innendurchmesser D2 auf, welcher größer ist als der Innendurchmesser D1 des Zulaufes 1 bzw. des Ablaufes 2. Der Innendurchmesser D2 im Bereich des rohrförmigen Abschnittes 10 beträgt im Ausführungsbeispiel zwischen dem 2-fachen und 3-fachen des Innendurchmessers D1.

Die Gesamtlänge L des Schlammabscheiders beträgt im Ausführungsbeispiel zwischen dem 2-fachen und dem 4-fachen des Außendurchmessers D des rohrförmigen Abschnittes 10. Hierdurch ergibt sich eine im Wesentlichen rohrförmige Ausgestaltung des gesamten Schlammabscheiders.

Der Schlammabscheider weist an seinem Zulauf 1 und Ablauf 2 jeweils Außengewinde auf, über welche er mit weiteren Elementen des Heizkreises verschraubt werden kann. Alternativ oder zusätzlich können Zulauf 1 und Ablauf 2 jeweils einen Flanschabschnitt aufweisen.

Im Ausführungsbeispiel ist der Auffangbehälter durch Umformung eines Kupferrohres gefertigt. Das Anschlussstück 6 ist in eine Öffnung des Auffangbehälters fluiddicht über eine Lötnaht 9 eingelötet. Das Innenrohr 4 ist in das ablaufseitige Ende des Auffangbehälters lediglich eingepresst, da hier keine vollkommene Dichtigkeit benötigt wird. Die Außengewinde sind jeweils an einem Ring 15 vorgesehen, welcher das zulaufseitige bzw. ablaufseitige Ende des Auffangbehälters umgibt und durch eine kragenförmige Umbördelung 16 gehalten wird. Alternativ könnte der Ring als Flanschabschnitt ausgeführt sein, bspw. als 4-Loch-Flansch.

Alternativ könnte der Auffangbehälter auch als Metallgussteil hergestellt werden, insbesondre aus Messing. Auch in diesem Fall würde das Innenrohr in dem Auffangbehälter eingepresst.

Weiterhin besteht die Möglichkeit, den Auffangbehälter und/oder das Innenrohr als Plastik-Spritzgussteil zu fertigen. Bevorzugt wird in diesem Fall der Auffangbehälter zweiteilig ausgeführt, wobei die Auftrennung in zwei Teile im Bereich des rohrförmigen Abschnittes 10 erfolgt. Die beiden Elemente können über eine Dichtung miteinander verbunden werden. Das Anschlussstück 6 kann in diesem Fall angespritzt werden.

Der Abscheider kann beispielsweise wie folgt dimensioniert sein:
Länge L: 130mm mit 1 "-Anschluss; bevorzugte Weite von Zu- und Ablauf: DN20
Länge L: 180mm mit 1½" -Anschluss; bevorzugte Nennweite DN25
Länge L: 180mm mit 2"-Anschluss; bevorzugte Nennweite DN32
Länge L: 210 mm bis 250 mm mit 4-Loch-Flansch-Anschluss; bevorzugte Nennweite DN40

Durch solche Standardabmessungen lässt sich der Schlammabscheider auch in bestehenden Anlagen nachrüsten. Durch seine im Wesentlichen rohrförmige Gestalt kann er problemlos in einen senkrecht verlaufenden Abschnitt einer Rohrleitung eingesetzt werden.

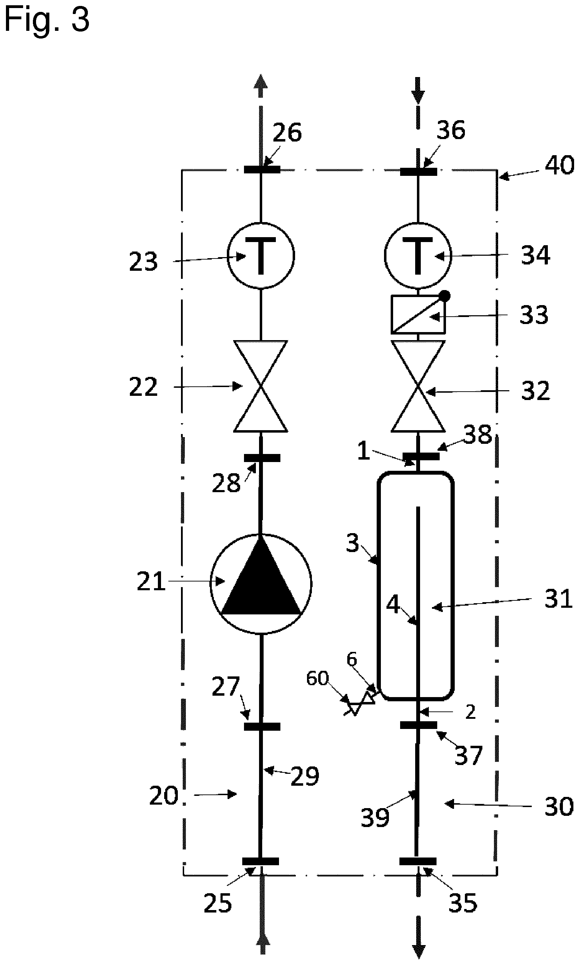

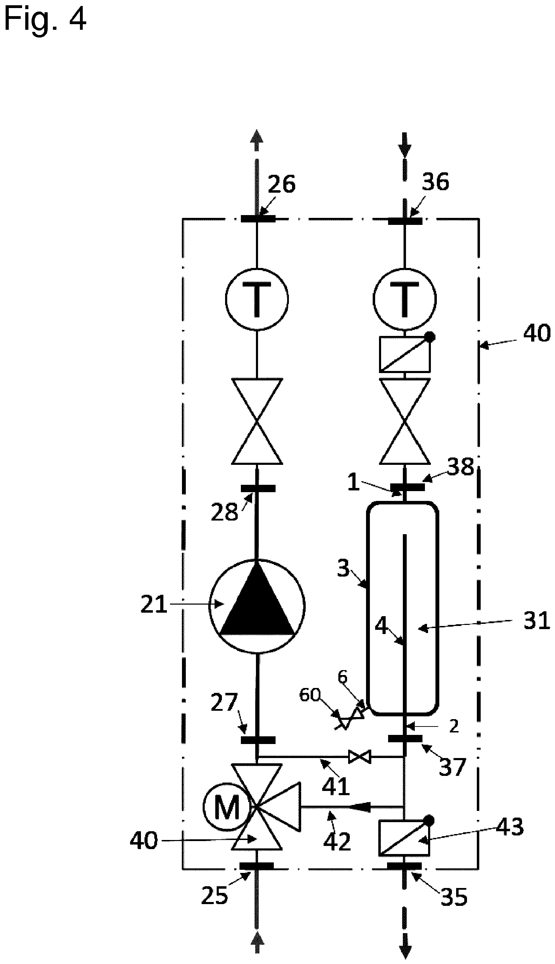

Fig. 3 und 4 zeigen zwei Ausführungsbeispiele erfindungsgemäßer Heizkreis-Pumpenbaugruppen gemäß dem zweiten Aspekt der vorliegenden Erfindung. Solche Heizkreis-Pumpenbaugruppen bestehen aus mehreren vormontierten Elementen und erleichtern die Installation eines Heizkreises.

Eine Heizkreis-Pumpenbaugruppe umfasst einen Vorlauf-Rohrabschnitt 20 und einen Rücklauf-Rorabschnitt 30. Im Vorlauf-Rohrabschnitt 20 ist eine Heizkreispumpe 21 integriert. In den Rücklauf-Rohrabschnitt 30 ist gemäß dem zweiten Aspekt der vorliegenden Erfindung ein am Schlammabscheider 31 integriert.

Der Schlammabscheider 31 weist bevorzugt einen Zulauf 1 und einen Ablauf 2 mit einer gemeinsamen Achse auf, so dass der Schlammabscheider anstelle eines geraden Rohrsegmentes in den Rücklauf-Rohrabschnitt 30 eingefügt werden kann. Bevorzugt weist der Schlammabscheider 31 die oben im Hinblick auf den ersten Aspekt näher diskutierten Dimensionierungen auf. Insbesondere kann der Schlammabscheider im Wesentlichen rohrförmig sein, so dass er in vorhandene Heizkreis-Pumpenbaugruppen problemlos integriert werden kann.

Bei dem in Fig. 3 gezeigten Ausführungsbeispiel beruht der Schlammabscheider 31 auf dem oben im Hinblick auf den ersten Aspekt näher beschriebenen Prinzip. Insbesondere weist er einen Innenrohr 4 auf, welches von einem Auffangbehälter 3 so umgeben wird, dass zwischen Innenrohr 4 und Auffangbehälter 3 ein zur Hauptachse des Schlammabscheiders koaxialer Ringraum entsteht. Weiterhin kann er einen Anschluss 6 im unteren Bereich des Ringraumes aufweisen, an welchem ein Entleerungshahn 60 angeordnet ist. Weiterhin können am Außenumfang des Auffangbehälters Permanentmagnete, insbesondre Neodym-Magnete, vorgesehen sein.

Besonders bevorzugt ist der Schlammabscheider 31 so ausgestaltet sein, wie dies oben im Hinblick auf den ersten Aspekt und insbesondere im Hinblick auf die Ausführungsbeispiele in Fig. 1 und 2 näher erläutert wurde.

Der Schlammabscheider 31 ist innerhalb der Heizkreis-Pumpenbaugruppe bevorzugt an einer Position im Rücklauf-Rohrabschnitt 30 angeordnet, an welcher im Vorlauf-Rohrabschnitt die Pumpe 21 angeordnet ist. Insbesondere weist er hierfür die gleiche Länge wie die Pumpe 21 auf.

Die Heizkreis-Pumpenbaugruppe weist Anschlüsse 25 und 35 auf, mit welchen sie kesselseitig mit dem Vorlauf bzw. dem Rücklauf verbunden wird, sowie Anschlüsse 26 und 36, mit welchen sie heizungsseitig mit dem Vorlauf bzw. dem Rücklauf verbunden wird.

Der Vorlauf-Rohrabschnitt 20 und der Rücklauf-Rohrabschnitt 30 weisen jeweils ein Absperrventil 22 bzw. 32 sowie ein Thermometer 23 bzw. 34 auf. Im Rücklauf-Rohrabschnitt 30 ist weiterhin ein Rückschlagventil 33 vorgesehen.

Die Pumpe 21 und der Schlammabscheider 31 sind jeweils über obere Verbindungsstellen 28 bzw. 38 mit einem oberen Teil des Vorlauf-Rohrabschnitts 20 bzw. des Rücklauf-Rohrabschnitts 30 der Heizkreis-Pumpenbaugruppe verschraubt, sowie über untere Verbindungsstellen 27 und 37 mit einem unteren Teilen des Vorlauf-Rohrabschnitts 20 bzw. des Rücklauf-Rohrabschnitts 30 der Heizkreis-Pumpenbaugruppe.

Die gesamte Heizkreis-Pumpenbaugruppe kann über eine gemeinsame Isolierung verfügen. Insbesondere kann die Isolierung zwei Formschalen umfassen, eine rückwärtige und eine vorderseitige Formschale. Die Formschalen sind bevorzugt mit inneren Aussparungen für die einzelnen Elemente der Heizkreis-Pumpenbaugruppe versehen. Bevorzugt weisen die Formschalen für den Vorlauf-Rohrabschnitt 20 und den Rücklauf-Rohrabschnitt 30 jeweils die gleichen Aussparungen auf. Hierdurch kann der Schlammabscheider 31 problemlos an der Stelle des Rücklauf-Rohrabschnitts 30 eingesetzt werden, welche im Vorlauf-Rohrabschnitt 20 für die Pumpe vorgesehenen ist.

Die Isolierung weist bevorzugt im Bereich der Pumpe 21 eine vorderseitige Öffnung auf. Eine entsprechende vor dem Schlammabscheider 31 angeordnete Öffnung kann durch einen Deckel aus Isoliermaterial verschlossen werden.

Insbesondere kann eine Isolierung eingesetzt werden, wie sie aus der DE 202013002350U1 bekannt ist.

Der Rücklauf-Rohrabschnitt 20 und der Vorlauf-Rohrabschnitt 30 sind bevorzugt mechanisch miteinander verbunden. Hierfür kann beispielsweise ein im oberen Bereich angeordnetes Verbindungselement vorgesehen sein. Alternativ oder zusätzlich können die beiden Rohrabschnitte auch über funktionale Elemente miteinander verbunden werden.

Bei dem in Fig. 3 dargestellten Ausführungsbeispiel sind der Vorlauf- und der Rücklauf-rohrabschnitt innerhalb der Baugruppe fluidisch voneinander getrennt. Im unteren Bereich der Baugruppe sind an den Verbindungsstellen 27 und 37 der Pumpe bzw. des Schlammabscheiders lediglich Anschlusstücke 29 und 39 angeordnet, welche die kesselseitigen Anschlüsse 25 und 35 der Baugruppe bilden.

Bei dem in Fig. 4 dargestellten Ausführungsbeispiel ist dagegen anstelle der Anschlussstücke 29 und 39 eine Mischbaugruppe vorgesehen. Diese umfasst ein Drei-Wege-Ventil 40, über welches kalte Flüssigkeit aus dem Rücklauf über die Leitung 42 dem Vorlauf zugemischt werden kann. Das Drei-Wege-Ventil ist bevorzugt motorisch verstellbar.

Weiterhin ist im Ausführungsbeispiel eine Verbindungsleitung 41 zwischen dem Vorlauf-Rohrabschnitt und dem Rücklauf-Rohrabschnitt mit einem darin angeordneten Absperrventil, sowie einen zusätzliches Rückschlagventil 43 im Rücklauf-Rohrabschnitt vorgesehen.

Bis auf die zusätzlichen, kesselseitig montierten Elemente entspricht die Baugruppe in Fig. 4 der in Fig. 3 gezeigten Baugruppe.

Die wichtigsten Aspekte der vorliegenden Erfindung werden im folgenden noch einmal kurz zusammengefasst:
Die vorliegende Erfindung integriert gemäß dem zweiten Aspekt einen Pumpenschutz für die Heizkreispumpe in Form eines Schlammabscheiders in die Heizkreis-Pumpenbaugruppe. Durch die verwendeten Standardabmessungen und die schlanke Bauform ist dieser problemlos auch in bestehenden Baugruppen nachrüstbar.

Der Schlammabscheider gemäß dem ersten Aspekt, welcher natürlich auch unabhängig von einer Heizkreis-Pumpenbaugruppe eingesetzt werde kann, kombiniert einen geringen Druckverlust mit einer hohen Abscheideleistung. Es handelt sich erfindungsgemäß um einen Inline-Schlammabscheider, auf welchen optional von außen abnehmbare Permanentmagnete aufgesetzt werden können.

Der Schlammabscheider weist einen Auffangbehälter auf, welcher koaxial zu dem Hauptstrom durch den Schlammabscheider angeordnet ist. In den Auffangbehälter wird ein Nebenstrom abgezweigt, aus welchem Schlamm und/oder Magnetit abgeschieden werden und sich im Auffangbehälter ansammeln.

Ein Ablassen des Schlammes bzw. Magnetits kann beispielsweise im Rahmen der jährlichen Wartung erfolgen.

Bis auf seine senkrechte Einbaulage stellt der Schlammabscheider keinerlei besondere Anforderungen an die Einbausituation, und kann daher problemlos in beliebige Heizkreisläufe, und insbesondere in Heizkreis-Pumpenbaugruppen integriert werden.

Der Schlammabscheider kann insbesondere sowohl in gedämmte, als auch in ungedämmte Heizkreis-Pumpenbaugruppen integriert werden.

## Patentansprüche

1. Schlammabscheider für einen Heizkreislauf mit einem Zulauf, einem Ablauf und einem Auffangbehälter,
**dadurch gekennzeichnet,**
**dass** der Schlammabscheider ein in den Auffangbehälter hineinragendes, mit dem Ablauf verbundenes Innenrohr aufweist, wobei der Auffangbehälter um das Innenrohr herum einen Ringraum bildet, welcher zum Zulauf hin offen ist.

2. Schlammabscheider nach Anspruch 1, wobei der Auffangbehälter das Innenrohr koaxial umgibt und/oder wobei der Zulauf und der Ablauf eine gemeinsame Achse aufweisen und wobei bevorzugt das Innenrohr und/oder der Auffangbehälter die gemeinsame Achse des Zulaufs und Ablaufs koaxial umgeben.

3. Schlammabscheider nach Anspruch 1 oder 2, wobei ein inneres Ende des Innenrohrs offen ist und dem Zulauf frei gegenüberliegt, wobei bevorzugt ein Hauptstrom durch den Schlammabscheider direkt von dem Zulauf zu dem offenen Ende des Innenrohrs fließt und/oder wobei bevorzugt ein Nebenstrom an dem inneren Ende des Innenrohrs vorbei in den durch den Auffangbehälter und das Innenrohr gebildeten Ringraum fließt.

4. Schlammabscheider nach einem der vorangegangenen Ansprüche, wobei das Innenrohr mindestens eine und bevorzugt mehrere seitliche Öffnungen aufweist, wobei bevorzugt zumindest ein Nebenstrom an dem inneren Ende des Innenrohrs vorbei durch den durch den Auffangbehälter und das Innenrohr gebildeten Ringraum zu der mindestens einen seitlichen Öffnung des Innenrohrs fließt und/oder wobei bevorzugt die eine oder mehreren seitlichen Öffnungen in der Nähe des inneren Endes des Innenrohrs vorgesehen sind.

5. Schlammabscheider nach einem der vorangegangenen Ansprüche, wobei der durch den Auffangbehälter und das Innenrohr gebildete Ringraum einen Anschluss für einen Entleerungshahn aufweist, welcher bevorzugt im Bereich des ablaufseitigen Endes des Ringraums vorgesehen ist.

6. Schlammabscheider nach einem der vorangegangenen Ansprüche, wobei der Auffangbehälter einen mittleren rohrförmigen Abschnitt aufweist, welcher sich bevorzugt zum Ablauf und zum Zulauf hin verjüngt,
und/oder wobei der maximale Innendurchmesser des Auffangbehälters maximal das 5-fache des Innendurchmessers des Zu- oder Ablaufs beträgt, bevorzugt maximal das 4-fache, weiter bevorzugt maximal das 3-fache,
und/oder wobei der maximale Innendurchmesser des Auffangbehälters mindestens das 1,2-fache des Innendurchmessers des Zu- oder Ablaufs beträgt, bevorzugt mindestens das 1,4-fache, weiter bevorzugt mindestens das 1,8-fache,
und/oder wobei sich das Innenrohr im Bereich des Ringraums einen kleineren Innendurchmesser aufweist als im Bereich des Ablaufs, wobei der Innendurchmesser des Innenrohrs im Bereich des Ringraums bevorzugt um mindestens 10% kleiner ist als im Bereich des Ablaufs,
und/oder wobei die Länge des Schlammabscheiders mindestens das 1,5-fache der maximalen Dicke des Schlammabscheiders beträgt, bevorzugt mindestens das 2-fache der maximalen Dicke.

7. Schlammabscheider nach einem der vorangegangenen Ansprüche, wobei das Innenrohr im Bereich des Ablaufs in den Auffangbehälter eingepresst ist.

8. Schlammabscheider nach einem der vorangegangenen Ansprüche, wobei der Auffangbehälter als Metallgussteil oder als umgeformtes Rohr oder als Kunststoff-Spritzgussteil ausgeführt ist, und/oder wobei ein Anschluss für einen Entleerungshahn einstückig mit dem Auffangbehälter hergestellt oder mit einer Öffnung des Auffangbehälters verlötet oder an dieser angespritzt ist, und/oder wobei der Auffangbehälter einstückig ist oder aus mindestens zwei Elementen besteht, welche bevorzugt über eine Dichtung oder stoffschlüssig miteinander verbunden sind.

9. Schlammabscheider nach einem der vorangegangenen Ansprüche, mit mindestens einem Permanentmagneten, welcher im Bereich des Ringraums am Außenumfang des Auffangbehälters angeordnet ist, wobei bevorzugt einer oder mehrere Permanentmagnete den Auffangbehälter ringförmig umgeben und/oder wobei bevorzugt der mindestens eine Permanentmagnet abnehmbar ist.

10. Heizkreis-Pumpenbaugruppe mit einem Vorlauf-Rohrabschnitt, einem Rücklauf-Rohrabschnitt und einer im Vorlauf-Rohrabschnitt angeordneten Heizkreis-Pumpe,
**dadurch gekennzeichnet,**
**dass** ein Schlammabscheider in den Rücklauf-Rohrabschnitt der Heizkreis-Pumpenbaugruppe integriert ist.

11. Heizkreis-Pumpenbaugruppe nach Anspruch 10, wobei der Vorlauf-Rohrabschnitt und der Rücklauf-Rohrabschnitt mechanisch miteinander verbunden sind, und/oder wobei der Vorlauf-Rohrabschnitt und der Rücklauf-Rohrabschnitt jeweils ein Thermometer und/oder ein Absperr-Ventil aufweisen, und/oder wobei der Vorlauf-Rohrabschnitt und der Rücklauf-Rohrabschnitt parallel zueinander verlaufen und die gleiche Länge und/oder parallel zueinander angeordnete Anschlüsse für den kesselseitigen und heizkreisseitigen Vor- bzw. Rücklauf aufweisen.

12. Heizkreis-Pumpenbaugruppe nach Anspruch 10 oder 11, wobei die Länge des Schlammabscheiders zwischen 50% und 150% der Länge der Pumpe beträgt, bevorzugt zwischen 90 % und 110 %, wobei weiter bevorzugt der Schlammabscheider und die Pumpe die gleiche Länge aufweisen,
und/oder wobei der Schlammabscheider einen Ablauf und einen Zulauf umfasst, welche eine gemeinsame Achse aufweisen und/oder jeweils mit einem Rohrelement und/oder einer Ventilbaugruppe verschraubt sind,
und/oder wobei der Schlammabscheider einen mittleren rohrförmigen Abschnitt aufweist, welcher sich bevorzugt zum Ablauf und zum Zulauf hin verjüngt und/oder koaxial zu der gemeinsamen Achse von Ablauf und Zulauf angeordnet ist,
wobei bevorzugt der maximale Innendurchmesser des Schlammabscheiders maximal das 5-fache des Innendurchmessers des Zu- oder Ablaufs beträgt, bevorzugt maximal das 4-fache, weiter bevorzugt maximal das 3-fache, und/oder wobei der maximale Innendurchmesser des Schlammabscheiders mindestens das 1,2-fache des Innendurchmessers des Zu- oder Ablaufs beträgt, bevorzugt mindestens das 1,4-fache, weiter bevorzugt mindestens das 1,8-fache,
und/oder wobei die Länge des Schlammabscheiders mindestens das 1,5-fache der maximalen Dicke des Schlammabscheiders beträgt, bevorzugt mindestens das 2-fache der maximalen Dicke.

13. Heizkreis-Pumpenbaugruppe nach einem der Ansprüche 10 bis 12, mit einer gemeinsamen Isolierung für die Bestandteile der Heizkreis-Pumpenbaugruppe, welche bevorzugt mindestens eine vordere und eine rückseitige Formschale aufweist, wobei die vordere Formschale bevorzugt mindestens eine Aussparung für die Pumpe aufweist und/oder den Schlammabscheider überdeckt, insbesondere durch einen im Bereich des Schlammabscheiders in eine Aussparung der vorderen Formschale eingesetzten Deckel.

14. Heizkreis-Pumpenbaugruppe nach einem der Ansprüche 10 bis 13, wobei es sich bei dem Schlammabscheider der Heizkreis-Pumpenbaugruppe um einen Schlammabscheider gemäß einem der Ansprüche 1 bis 9 handelt.

15. Heizung mit einem Heizkreis mit einem Schlammabscheider und/oder einer Heizkreis-Pumpenbaugruppe nach einem der vorangegangenen Ansprüche.
